# EUROPÄISCHE PATENTSCHRIFT

(11) **EP 3 939 945 B1**
(45) Veröffentlichungstag und Bekanntmachung des Hinweises auf die Patenterteilung: **20.05.2026**
(21) Anmeldenummer: 20185442.9
(22) Anmeldetag: 13.07.2020
(51) Int. Cl.: C04B 7/36, C04B 28/18, C04B 28/30, C01B 33/24

(54) **VERFAHREN ZUM HERSTELLEN EINES BAUSTOFFES**
METHOD FOR PRODUCING A MATERIAL
PROCÉDÉ DE FABRICATION D'UN MATÉRIAU DE CONSTRUCTION

(43) Veröffentlichungstag der Anmeldung: 19.01.2022
(73) Patentinhaber: OLIMENT ® GmbH, 04571 Rötha OT Espenhain (DE)
(72) Erfinder: BELLMANN, Frank, 99425 Weimar (DE); LUDWIG, Horst-Michael, 99423 Weimar (DE); BRENDEL, Nadine, 07745 Jena (DE)
(74) Vertreter: Wunderlich & Heim Patentanwälte PartG mbB

(56) Entgegenhaltungen:
- US-A- 4 274 881
- US-A1- 2015 056 437
- M. VESPA ET AL: "Characterisation of magnesium silicate hydrate phases (M-S-H): A combined approach using synchrotron-based absorption-spectroscopy and ab initio calculations", CEMENT AND CONCRETE RESEARCH., vol. 109, 1 July 2018 (2018-07-01), US, pages 175 - 183, XP055755427, ISSN: 0008-8846, DOI: 10.1016/j.cemconres.2018.03.011
- HUNG TRAN: "PhD Thesis: DEVELOPMENT OF MAGNESIUM SILICATE HYDRATE BINDER SYSTEMS", DEPARTMENT OF CIVIL AND NATURAL RESOURCES ENGINEERING, UNIVERSITY OF CANTERBURY, 30 April 2019 (2019-04-30), Canterbury, pages 1 - 358, XP055755439, Retrieved from the Internet <URL:file:///C:/Users/OB51920/Downloads/Tran,%20Hung%20Manh_Final%20PhD%20Thesis.pdf> [retrieved on 20201201]

## Beschreibung

Die Erfindung betrifft ein Verfahren zum Herstellen eines Baustoffes, welcher unter anderem als Betonersatz verwendet werden kann.

Beton wird durch Mischen von Sand, Kies, Wasser und Zement hergestellt, wobei teilweise noch Zusatzstoffe und Zusatzmittel verwendet werden. Zement besteht aus einem oder mehreren Hauptbestandteilen. Der wichtigste Hauptbestandteil dabei ist Portlandzementklinker. Dieses Material wird in einem Hochtemperaturprozess aus Kalkstein, Ton, Mergel und anderen Stoffen gebrannt. Portlandzementklinker hat eine durchschnittliche chemische Zusammensetzung von 55-65% CaO, 18-22%SiO₂, 1-5% Al₂O₃, 1-5% Fe₂O₃ sowie anderen Oxide in geringen Konzentrationen.

Die Produktion des Portlandzementklinkers führt zu Kohlendioxidemissionen (CO₂), die unter anderem auf einer Entsäuerung des Kalksteins beziehungsweise des Mergels beruhen. Bei der Herstellung einer Tonne Portlandzementklinker werden etwa 0,8 Tonnen Kohlendioxid freigesetzt, sofern der gesamte technologische Prozess betrachtet wird.

Derzeit werden Alternativen für eine Herstellung von Zement gesucht, die nicht auf einer Entsäuerung von Kalkstein oder Mergel beruhen und somit weniger CO₂ freisetzen. Eine mögliche Alternative wäre die Anregung von ultramafischen Gesteinen. Es handelt sich hierbei um Gesteine mit einer hohen Konzentration an Magnesiumoxid, Eisenoxid und Siliziumdioxid. In aktuellen Stellungnahmen der Zementindustrie wird jedoch darauf hingewiesen, dass es derzeit keine realen Forschungsansätze auf diesem Gebiet gibt und die Anregung von ultramafischen Gesteinen nicht als realistische Option für eine nachhaltige Reduzierung der Kohlendioxidemissionen der Zementindustrie angesehen wird.

Eine chemische Reaktion von ultramafischen Gesteinen mit Wasser ist sehr langsam, wie Untersuchungen zur chemischen Verwitterung dieser Gesteine zeigen. Aus diesem Grund wurde bisher keine Möglichkeit gesehen, Bindemittel für die Herstellung von Beton direkt aus diesen Gesteinen zu produzieren.

Ein wichtiges Mineral in ultramafischen Gesteinen ist Olivin. Dabei handelt es sich um eine Mischkristallreihe zwischen Fayalit (Fe₂SiO₄), Forsterit (Mg₂SiO₄), Tephroit (Mn₂SiO₄) und anderen Mineralien der Form A₂[SiO₄]. Natürliche Olivinvorkommen sind dokumentiert und häufig handelt es sich bei dem Olivin um ein magnesiumreiches Material mit Eisenanteilen. Die Analogie zwischen Forsterit und Belit, (Ca₂SiO₄), einem Mineral des Portlandzementklinkers, hat Vermutungen angeregt, dass eine Herstellung von Bindemitteln aus Forsterit möglich sei. Dies basiert auch auf den Beobachtungen der Hydratation von Magnesiumoxychloriden, die als Sorelzemente bekannt sind. Teilweise werden die Chloride der Sorelzemente auch durch andere Ionen wie Sulfat- oder Karbonationen ersetzt. Voraussetzung für die Erhärtung dieser Zemente ist immer die Anwesenheit von freiem MgO im Bindemittel. Allerdings ist MgO in der Natur nur selten zu finden und muss aus Forsterit (Mg₂SiO₄) oder anderen magnesiumhaltigen Rohstoffen hergestellt werden.

Diesbezüglich sind Verfahren bekannt, in denen Forsterit in MgO und SiO₂ getrennt wird.

Eine derartige Synthesemöglichkeit zur Herstellung von MgO aus Forsterit und anderen Magnesiumsilikaten wird in WO 2012/168176 A1 beschrieben. Dabei erfolgt die Trennung der Oxide des Forsterits in MgO und SiO₂ in einem Hochtemperaturprozess bei Temperaturen von 800°C bis 1000°C. Für die Reaktion werden Alkalien zugegeben, um die Abtrennung des SiO₂ in Form von Natrium- oder Kaliumsilikat erreichen zu können. Das MgO wird als MgCO₃ abgeschieden. Nach der Trennung der beiden Reaktionsprodukte kann das MgCO₃ in einem zweiten Schritt erneut thermisch behandelt werden und es entsteht MgO als Ausgangsstoff für die Bindemittelherstellung. Das im zweiten Prozessschritt freiwerdende Kohlendioxid kann zusammen mit den Alkalien aus dem Alkalisilikat zurück in den ersten Prozessschritt geführt werden.

Das auf diesem Weg erhaltene Magnesiumoxid kann zu einer Herstellung von Bindemitteln verwendet werden. Dazu wird das MgO beispielsweise mit Magnesiumkarbonat gemischt und diese Mischung kann nach dem Anmachen mit Wasser bei Raumtemperatur erhärten.

Eine alternative Möglichkeit zur Herstellung von Zementen auf der Basis von Magnesiumoxid, die in WO 2009/156740 A1 und WO 2012/028418 A1 beschrieben ist, beruht auf der Herstellung einer Mischung aus MgO, MgCO₃ und gegebenenfalls Mg(OH)₂ sowie Silikaten. Diese Mischung enthält kein reaktionsfähiges Mg₂SiO₄, sondern der Forsterit wird vorher in einem zusätzlichen Prozess zu MgCO₃ und SiO₂ verarbeitet. Dazu wird ein Reaktor beschrieben, in dem Forsterit mit CO₂ bei relativ hohen Drücken in Anwesenheit von Wasser und gelösten Salzen zu SiO₂ und Magnesiumkarbonat reagieren kann. Das Magnesiumkarbonat kann durch Kalzination zu MgO verarbeitet werden und mit Hilfe des dabei abgespaltenen CO₂ kann neuer Forsterit zersetzt werden.

Mit Hilfe der beiden genannten Verfahren können Zemente mit hohem Magnesiumge-halt hergestellt werden. Allerdings wird dabei immer ein technologischer Zwischenschritt benötigt, der eine Umsetzung des Forsterits in MgO oder MgCO₃ unter Abspaltung von SiO₂ beinhaltet, wodurch die Gesamtprozesse sehr aufwendig und komplex sind.

Die US 4,274,881 betrifft einen Hochtemperatur-Zement. Beispiel 7 beschreibt ein Zement-System aus Class-G-Zement, feinteiligem Quarz, calciniertem Chrysotil und deionisiertem Wasser, das unter hydrothermalen Bedingungen (180°C - 400°C, 68,9 MPa) zu Diopsid sowie teils Wollastonit, Xonotlit und Serpentinit umkristallisiert.

Der Erfindung liegt daher die **Aufgabe** zugrunde, ein Verfahren zum Herstellen eines Baustoffes anzugeben, welches effizienter und umweltfreundlicher als herkömmliche Verfahren ist.

Diese Aufgabe wird erfindungsgemäß durch ein Verfahren mit den Merkmalen des Anspruchs 1 gelöst.

Vorteilhafte Ausführungsformen der Erfindung sind in den Unteransprüchen und in der Beschreibung angegeben.

Entsprechend der Erfindung ist ein Verfahren zum Herstellen eines Baustoffes mit den Merkmalen des Anspruchs 1 vorgesehen.

Unter Autoklav wird meist ein gasdicht verschließbarer Druckbehälter, der für die thermische Behandlung von Stoffen im Überdruckbereich eingesetzt werden kann, verstanden. Im Sinne der Erfindung kann hierunter aber auch allgemeiner ein Gefäß oder eine Einrichtung zum Einschließen eines Volumens verstanden werden, welche während des Erwärmens des zerkleinerten und homogenisierten Ausgangsproduktes dessen Austrocknen verhindert. Dies kann zum einen durch den Verschluss des Volumens erfolgen, zum anderen aber beispielsweise auch indem ausreichend Feuchtigkeit in der Einrichtung vorhanden ist oder zugeführt wird. So ist es beispielsweise noch im Sinne der Erfindung, das zerkleinerte und homogenisierte Ausgangsprodukt in einem Spezialraum zu erwärmen, in dem dafür gesorgt ist, dass die Luftfeuchtigkeit dauerhaft hoch genug ist. Dies ist insbesondere bei Temperaturen unter 100°C, insbesondere 60°C, möglich.

Der Erfindung liegt die überraschende Erkenntnis zugrunde, dass Forsterit zusammen mit SiO₂ und Wasser zu Magnesiumsilikathydrat (M-S-H) reagieren und diese Reaktionen durch erhöhte Temperaturen beschleunigt werden kann. Bei Forsterit handelt es sich um ein Mineral mit der chemischen Zusammensetzung Mg₂SiO₄. Die der erfindungsgemäßen Erkenntnis zugrundeliegende Reaktion kann wie folgt beschrieben werden:

Mg₂SiO₄ + SiO₂ + 2 H₂O →2 MgO-SiO₂-H₂O

Folglich reagiert Forsterit mit SiO₂ sowie Wasser zu Magnesiumsilikathydrat.

Daher wird gemäß der Erfindung vorgeschlagen, eine Forsteritquelle zusammen mit einer SiO₂-Quelle als Ausgangsprodukt bereitzustellen, zu zerkleinern und zu homogenisieren.

Das erforderliche Wasser kann entsprechend der Erfindung auf verschiedenen Wegen zugeführt werden, welche auch miteinander kombiniert werden können. Zum einen ist es möglich, dem Ausgangsprodukt vor, nach oder zeitgleich mit dem Zerkleinern und dem Homogenisieren Wasser zuzufügen. Zum anderen ist ebenfalls möglich, in dem Autoklav, in dem das Ausgangsprodukt behandelt wird, Wasserdampf hinzuzuführen und dem Prozess so die nötige Menge an Wasser beizugeben.

Selbstverständlich können beide Wege auch kombiniert werden.

Durch die Behandlung des Ausgangsproduktes in einem Autoklav bei Temperaturen von über 30°C wird die oben beschriebene Reaktion beschleunigt, so dass mit dem erfindungsgemäßen Verfahren ein verfestigter Baustoff, insbesondere ein Fertigbauteil, hergestellt werden kann, welches ähnlich wie bekannte Betonsteine oder Formelemente aus Beton verwendet werden kann. Es ist ebenfalls möglich, beispielsweise Kacheln zu produzieren, die zum Verkleiden von Gebäuden oder dergleichen verwendet werden können. Wesentlich ist hierbei, dass ein fester Baustoff erzeugt werden kann, der beliebig geformt sein kann und demnach auch unterschiedlichen Verwendungen zugeführt werden kann.

Mit dem erfindungsgemäßen Verfahren ist es somit möglich, einen Baustoff zu erzeugen, welcher eine deutlich bessere CO₂-Bilanz als konventioneller Zement hat, da kein Kalkstein entsäuert werden muss.

Auch ist der hier beschriebene Prozess beziehungsweise das Verfahren deutlich energieeffizienter, da keine Hochtemperaturprozesse wie bei der Herstellung von Portlandzementklinker benötigt werden.

Erfindungsgemäss wird als Forsteritquelle eine natürliche Olivinquelle verwendet.

Bevorzugt ist es, wenn als SiO₂-Quelle amorphes und/oder kristallines SiO₂ in reiner und/oder verunreinigter Form verwendet wird. Demnach kann als SiO₂-Quelle beispielsweise Quarz, Tridymit und/oder Cristobalit zugegeben werden. Zu den verunreinigten Siliziumträgern gehören unter anderem: thermisch behandelte Tone, Puzzolane, Zement, Hüttensand, Stahlwerksschlacke, karbonatisierter Zementstein aus dem Betonrecycling, Feldspäte, Glas, insbesondere Altglas, und andere silikatische Materialien mit einer SiO₂-Konzentration über 10% bevorzugt 30 %, vorteilhafterweise von über 50%. Nicht erfindungsgemäß wird das zerkleinerte, homogenisierte Ausgangsprodukt bei über 60°C, insbesondere bei über 80°C, behandelt, wobei sich in dem Autoklav ein entsprechender Druck einstellt, welcher unter dem atmosphärischen Druck liegt. Vorteilhaft ist es, wenn ein Wasserdampfpartialdruck in dem Autoklav auf über 3 bar eingestellt wird, dies kann beispielsweise mit höheren Temperaturen erreicht werden. So wird insbesondere ein Austrocknen des entstehenden Baustoffes bei der Wärmebehandlung verhindert.

Erfindungsgemäß ist, wenn das zerkleinerte und homogenisierte Ausgangsprodukt in dem Autoklav bei einer Temperatur von über 150°C und bei über 5 bar Wasserdampfpartialdruck über mindestens 12 Stunden behandelt wird. Ein derartig behandeltes Ausgangsprodukt stellt im Ergebnis einen Baustoff dar, welcher eine hohe Festigkeit hat.

Auch stellen diese Parameter einen guten Kompromiss zwischen benötigter Energie und benötigter Zeit dar. Es ist natürlich ebenso möglich, das Verfahren bei einer geringeren Temperatur über einen längeren Zeitraum durchzuführen und umgekehrt.

Bevorzugt kann in dem Autoklav eine CO₂-Quelle vorhanden sein. Das Vorhandensein von CO₂ kann zum einen den Erhärtungsvorgang des Baustoffes beschleunigen. Zum anderen kann so Kohlendioxid gebunden werden, so dass eine weitere diesbezügliche Verminderung möglich ist. Die zu Grunde liegende Reaktion kann wie folgt beschrieben werden:

Mg₂SiO₄ + 2 CO₂ → 2 MgCO₃ + SiO₂

Die Aufnahme von Kohlendioxid kann durch Einstellen von höheren CO₂-Partialdrücken und mittlerer Luftfeuchtigkeit beschleunigt werden.

Erfindungsgemäß wird die Forsteritquelle bei vorheriger fakultativer Zugabe von Korrekturstoffen gebrannt und/oder ein Oxidationsmittel zum Ausgangsprodukt zugegeben. Nicht erfindungsgemäß kann das zerkleinerte homogenisierte Ausgangsprodukt in einem druckfesten, formstabilen Behältnis in dem Autoklav eingebracht werden.

Wird natürlicher Olivin verwendet so tritt eine Porenbildung und Volumenvergrößerung während des Behandelns im Autoklav auf. Es wird vermutet, dass bedingt durch Fe₂SiO₄, welches in natürlichem Olivin vorhanden ist, während der Behandlung im Autoklav, parallel zur zuvor beschriebenen Reaktion auch folgende Reaktion abläuft.

Fe₂SiO₄ + 3 H₂O + Mg₂SiO₄ → Fe₂O₃ + H₂ + 2 MgO-SiO₂-H₂O

Hierbei liegt der entstandene Wasserstoff nach der Reaktion im gasförmigen Zustand vor. Das Entstehen des Gases erzeugt die Porosität beziehungsweise Volumenvergrößerung und Porenbildung in dem herzustellenden Baustoff. Zwar ist das Vorhandensein von Gas auch aus der Porenbetonherstellung bekannt, jedoch erfolgt dort das Entstehen des Gases vor dem Erhärtungsprozess, anders als im hier vorliegenden Fall, bei dem die Gasfreisetzung kontinuierlich während des gesamten Prozesses abläuft und somit die Festigkeit vermindert.

Um dies zu verhindern kann die Forsteritquelle vorbehandelt werden, beispielsweise indem sie gebrannt wird. Während des Brennverfahrens findet aber auch eine teilweise Umwandlung des Forsterits in Enstatit (MgSiO₃) statt. Jedoch ist Enstatit im Gegensatz zu Forsterit nicht in der Lage, mit SiO₂ und Wasser zu Magnesiumsilikathydrat zu reagieren. Daher können fakultativ Korrekturstoffe zugegeben werden, beispielsweise in Form von CaO-Quellen.

Alternativ kann während der Behandlung im Autoklav ein Oxidationsmittel wie MnO₂ vorgesehen werden, welches beispielsweise beim Aufbereiten des Ausgangproduktes zugegeben werden kann. Auch mit dieser Maßnahme kann das Bilden von Wasserstoffgas vermieden werden.

Eine andere Möglichkeit besteht darin, das Ausgangsprodukt in einem druckfesten, formstabilen Behältnis in den Autoklav einzubringen. Hier wird ein Ausdehnen des Wasserstoffgases durch das druckdichte Behältnis verhindert und so ebenfalls ein Ausgasen reduziert. Es ist auch möglich, zwei oder alle drei dieser Methoden zu kombinieren.

Bevorzugt liegt das Verhältnis in Massenprozent des Forsterits zu SiO₂ bei 30% zu 70% bis 85% zu 15%. Es können auch zusätzliche, zum Teil inerte, Zuschlagstoffe zugegeben werden, beispielsweise kann es sich hierbei um Streckmittel wie Kalksteinmehl, Korund, Sand, Kunststoffe, Anfallstoffe wie Aschen und Schlacken oder Metallbewehrung handeln.

Auch ist es möglich Zusätze zuzugeben, welche die Reaktion beeinflussen und steuern. Beispiele hierfür sind Calciumhydroxid, Keimbildner und organische Zusatzstoffe. Dabei sind oftmals geringe Konzentrationen ausreichend. Keimbildner beschleunigen den Reaktionsfortschritt und organische Zusatzmittel wie Fließmittel können den Wasserbedarf herabsetzen und somit die Porosität und Festigkeit des erhärteten Materials verbessern.

Bevorzugt beträgt das Verhältnis auf molarer Ebene zwischen Forsterit und SiO₂ 1:1. Bei diesem Verhältnis wird eine besonders gute Reaktion erreicht, bei der beide Ausgangsprodukte im Wesentlichen vollständig verbraucht werden.

Bevorzugt ist es ferner, wenn dem Ausgangsprodukt als Zuschlagstoff Sand zugegeben wird und das zerkleinerte homogenisierte Ausgangsprodukt mit Sand in eine Form gegeben wird und in dieser Form im Autoklav behandelt wird. Das so entstehende Produkt kann als verfestigter Baustoff, insbesondere als Fertigbauteil, verwendet werden. Anders ausgedrückt wird das Ausgangsprodukt analog zu Zement verwendet, wobei mit der Zugabe von Sand ein betonähnliches Produkt hergestellt werden kann, welches ähnliche Eigenschaften aufweist und auch ähnlich verwendet werden kann.

Im Folgenden werden einige Vergleichsversuche beschrieben, welche nicht erfindungsgemäß sind. Hierbei zeigt:

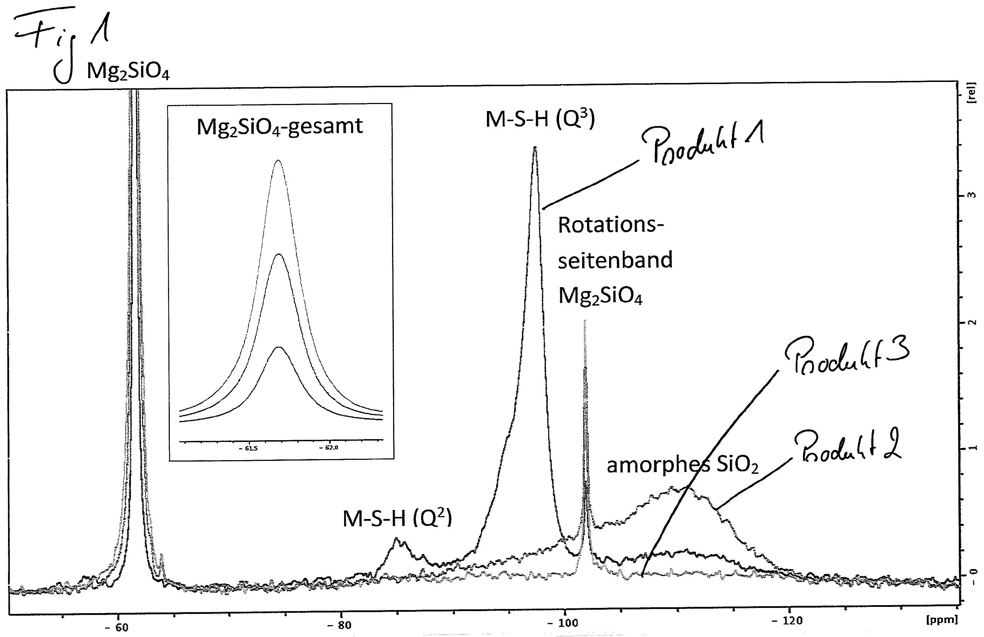

- Fig. 1: eine vergleichende Darstellung des Phasenbestands verschiedener Versuchsprodukte.

Zunächst wurden Vergleichsversuche unternommen, bei denen Forsterit und SiO₂ einmal bei 25°C für 28 Tage gelagert wurde (Produkt 2), Forsterit ohne Zugabe von SiO₂ für 28 Tage bei 60°C behandelt wurde (Produkt 3) und Forsterit mit SiO₂ für 28 Tage bei einer Temperatur von 60°C behandelt wurde (Produkt 1).

Das Ergebnis ist in Fig. 1 dargestellt, wobei die entsprechenden Kurven gekennzeichnet sind.

Detailliert wurde Forsterit durch Mahlung von 40,8 g Magnesiumhydroxidkarbonat (KMF 12-091.1000) und 12,9 g SiO₂ (Merck 1.13126.0500) in Ethanol für 2,5 Stunden in einer Planetenkugelmühle und anschließendem Trocknen und Brennen bei 1100°C für 2,5 Stunden hergestellt. Das entstandene Produkt wurde mittels QXRD untersucht und enthielt 98% Mg₂SiO₄ und 2% MgO.

Dieses Material (5,0 g) wurde mit 2,13 g amorphen SiO₂ (Merck 1.13126.0500) für eine Minute in der Scheibenschwingmühle gemahlen. Von diesem Gemisch wurden 2,0 g mit 2,0 g entionisiertem Wasser angemacht und in einem verschlossenen Gefäß für 28 Tage bei 60°C gelagert. Danach wurde die Probe (Produkt 1) bei 60°C getrocknet und analysiert. Der mittels Thermoanalyse und ²⁹Si MAS NMR ermittelte Phasenbestand betrug: 37% Forsterit, 17% amorphes SiO₂ und 46% Magnesiumsilikathydrat. Damit wird deutlich, dass eine chemische Reaktion von Forsterit, bei 69% in der Ausgangsmischung, und SiO₂, bei 30% in der Ausgangsmischung, unter Bildung von Magnesiumsilikathydrat, bei 0% in der Ausgangsmischung, eingetreten ist.

Im Gegensatz dazu war keine Reaktion eingetreten, wenn die Forsterit-SiO₂ Mischung bei Raumtemperatur gelagert wurde (Produkt 2) oder eine Referenzprobe aus reinem Forsterit ohne Zugabe von SiO₂ bei 60°C für den gleichen Zeitraum gelagert wurde (Produkt 3).

Offensichtlich ist eine deutliche Reaktion des Forsterits nach 4 Wochen nur möglich, wenn reaktionsfähiges SiO₂ zugegeben wird und die Temperatur höher als Raumtemperatur ist.

Dass eine erhöhte Temperatur die Reaktionsgeschwindigkeit weiter beschleunigt, wurde zum Vergleich in einem weiteren Versuch gezeigt. Hierbei wurde wiederum der wie oben beschrieben hergestellte Forsterit mit 2,13 g amorphen SiO₂ (Merck 1.13126.0500) für eine Minute in der Scheibenschwingmühle gemahlen. Von diesem Gemisch wurden 2,0 g mit 2,0 g entionisiertem Wasser angemacht und in einem verschlossenen Gefäß für 28 Tage bei 90°C gelagert.

Anschließend wurde die Probe bei 60°C getrocknet und der Phasenbestand mittels Thermoanalyse und ²⁹Si MAS NMR Spektroskopie untersucht. Dabei konnte festgestellt werden, dass die Probe 20% Forsterit, 8% SiO₂ und 71% Magnesiumsilikathydrat enthielt. Der Umsatzgrad war demzufolge höher als bei Produkt 1.

Im Vergleich zu dem Produkt 1 ist in dieser Probe eindeutig sichtbar, dass deutlich mehr Magnesiumsilikathydrat entstanden ist, wonach die Reaktion schneller ablief. Folglich kann die Reaktion zwischen Forsterit und SiO₂ durch höhere Temperaturen beschleunigt werden.

Des Weiteren wurde eine Festigkeitsuntersuchung des erfindungsgemäßen Baustoffes durchgeführt. Hierbei wurde das Ausgangsprodukt für diese Untersuchen durch Homogenisierung von Olivin (50 Gew.-%), Elkem Mikrosilika 940 (10 Gew.-%) und gemahlenem Altglas (40 Gew.-%) hergestellt. Der verwendete Olivin stammte aus einer natürlichen Lagerstätte in Aheim in Norwegen und hatte folgende chemische Zusammensetzung: 49,9 Gew.-% MgO, 41,9 Gew.-% SiO₂, 0,6 Gew.-% Al203, 6,9 Gew.-% Fe2O3 und 0,1 Gew.-% CaO.

Die Homogenisierung des Ausgangsproduktes erfolgte durch gemeinsame Mahlung in einer Scheibenschwingmühle für 30 Sekunden bei 700 U/min. Aus dem Ausgangsprodukt wurde Beton hergestellt, wobei die folgende Zusammensetzung gewählt wurde: 110 g Ausgangsprodukt, 110 g Normsand 0/2, 110 g Kies 2/8, 27,5 g Wasser und 0,7 g Fließmittel. Nach der Mischung wurde der Beton in eine würfelförmige Stahlform mit einer Kantenlänge von 5 cm eingefüllt und verdichtet. Die Form wurde verschlossen und unter Wasser im Autoklaven für 42 Stunden bei einen Wasserdampfpartialdruck von etwa 15 bar bei etwa 200°C behandelt.

Nach der Autoklavbehandlung wurde der erhärtete Würfel abgekühlt, entschalt und die Festigkeit bestimmt. Dabei wurde eine Druckfestigkeit von 25,5 MPa festgestellt, welche vergleichbar mit Beton aus Portlandzement ist.

Mit dem erfindungsgemäßen Verfahren ist es somit möglich, einen Baustoff, der flexibel verwendet werden kann, umweltfreundlicher herzustellen.

## Patentansprüche

1. Verfahren zum Herstellen eines Baustoffes,
wobei ein Ausgangsprodukt bereitgestellt wird, welches eine Forsteritquelle in Form einer natürlichen Olivinquelle und eine SiO₂-Quelle aufweist,
wobei das Ausgangsprodukt zerkleinert und homogenisiert wird,
wobei das zerkleinerte, homogenisierte Ausgangsprodukt in einem Autoklav bei einer Temperatur von über 150°C, bei über 5 bar und mindestens über 12 Stunden behandelt wird und
wobei dem Ausgangsprodukt vor, nach oder zeitgleich mit dem Zerkleinern und dem Homogenisieren Wasser zugegeben und dieses mit dem Ausgangsprodukt vermischt wird und/oder Wasserdampf im Autoklav eingebracht wird,
wobei die Forsteritquelle bei vorheriger fakultativer Zugabe von Korrekturstoffen zur Vermeidung von Enstatit-Bildung gebrannt wird und/oder ein Oxidationsmittel zum Ausgangsprodukt zugegeben wird.

2. Verfahren Anspruch 1,
**dadurch gekennzeichnet,**
**dass** als SiO₂-Quelle reines, amorphes und/oder SiO₂ in verunreinigter Form verwendet wird.

3. Verfahren nach einem der Ansprüche 1 bis 2,
**dadurch gekennzeichnet,**
**dass** im Autoklav eine CO₂-Quelle vorhanden ist.

4. Verfahren nach einem der Ansprüche 1 bis 3,
**dadurch gekennzeichnet,**
**dass** das Verhältnis in Mass.-% des Forsterit zu SiO₂ 30% zu 70% bis 85% zu 15% beträgt, wobei zusätzlich Zuschlagstoffe hinzugegeben werden können.

5. Verfahren nach einem der Ansprüche 1 bis 4,
**dadurch gekennzeichnet,**
**dass** das Verhältnis auf molarer Ebene zwischen Forsterit und SiO₂ im Verhältnis von 1:1 liegt.

6. Verfahren nach einem der Ansprüche 1 bis 5,
**dadurch gekennzeichnet,**
**dass** dem Ausgangsprodukt Sand hinzugegeben wird,
**dass** das zerkleinerte, homogenisierte Ausgangsprodukt, dem Sand zugegeben wurde, in eine Form gegeben wird und in dieser Form im Autoklav behandelt wird.

7. Verwendung des nach dem Verfahren nach Anspruch 6 entstehenden Produktes als verfestigter Baustoff, insbesondere als Fertigbauteil.

## Claims

1. Method for producing a building material,
wherein a starting material is provided which has a forsterite source in the form of a natural olivine source and a SiO₂ source,
wherein the starting material is crushed and homogenized,
wherein the crushed, homogenized starting material is treated in an autoclave at a temperature of above 150°C, at above 5 bar and at least above 12 hours and wherein water is added to the starting material before, after or at the same time with the crushing and homogenization and is mixed with the starting material and/or water steam is introduced into the autoclave,
wherein the forsterite source is calcined after optional addition of corrective agents to prevent enstatite formation and/or an oxidizing agent is added to the starting product.

2. Method according to claim 1,
**characterized in that**
pure, amorphous and/or contaminated SiO₂ is used as the SiO₂ source.

3. Method according to any one of claims 1 to 2,
**characterized in that**
a CO₂ source is present in the autoclave.

4. Method according to any one of claims 1 to 3,
**characterized in that**
the ratio in mass% of forsterite to SiO₂ is 30% to 70% up to 85% to 15%, wherein additionally additives can be added.

5. Method according to any one of claims 1 to 4,
**characterized in that**
the ratio at the molar level between forsterite and SiO₂ is in the proportion of 1:1.

6. Method according to any one of claims 1 to 5,
**characterized in that**
sand is added to the starting material,
**in that** the crushed, homogenized starting material to which sand has been added is placed in a mold and is treated in this mold in an autoclave.

7. Use of the product resulting from the method according to claim 6 as a solidified building material, in particular as a prefabricated component.

## Revendications

1. Procédé de fabrication d'un matériau de construction,
dans lequel on met à disposition un produit de départ qui présente une source de forstérite sous la forme d'une source naturelle d'olivine et une source de SiO2,
dans lequel le produit de départ est broyé et homogénéisé,
dans lequel le produit de départ broyé et homogénéisé est traité dans un autoclave à une température supérieure à 150°C, à plus de 5 bars et pendant au moins plus de 12 heures et
dans lequel de l'eau est ajoutée au produit de départ avant, après ou simultanément au broyage et à l'homogénéisation, et celle-ci est mélangée au produit de départ, et/ou de la vapeur d'eau est introduite dans l'autoclave, dans lequel la source de forstérite est cuite, avec ajout préalable facultatif de correctifs afin d'éviter la formation d'enstatite, et/ou un agent oxydant est ajouté au produit de départ.

2. Procédé selon la revendication 1,
**caractérisé en ce**
**que**, comme source de SiO2, on utilise du SiO2 pur, amorphe et/ou du SiO2 sous forme impurifiée.

3. Procédé selon l'une des revendications 1 à 2,
**caractérisé en ce**
**qu'**une source de CO2 est présente dans l'autoclave.

4. Procédé selon l'une des revendications 1 à 3,
**caractérisé en ce**
**que** le rapport en % en masse de la forstérite au SiO2 est de 30 % à 70 % jusqu'à 85 % à 15 %, des adjuvants pouvant en outre être ajoutés.

5. Procédé selon l'une des revendications 1 à 4,
**caractérisé en ce**
**que** le rapport au niveau molaire entre la forstérite et le SiO2 est de 1:1.

6. Procédé selon l'une des revendications 1 à 5,
**caractérisé en ce**
**que** du sable est ajouté au produit de départ,
**que** le produit de départ broyé et homogénéisé, auquel du sable a été ajouté, est placé dans un moule et est traité dans ce moule dans l'autoclave.

7. Utilisation du produit obtenu selon le procédé de la revendication 6 comme matériau de construction consolidé, notamment comme élément de construction préfabriqué.
